# EUROPEAN PATENT APPLICATION

(11) **EP 4 458 477 A1**
(43) Date of publication of application: **06.11.2024**
(21) Application number: 24163648.9
(22) Date of filing: 14.03.2024
(51) Int. Cl.: B05B 9/04, B05B 12/04, B05B 13/04, B05B 15/58, B25J 11/00

(54) **PAINTING MACHINE**

(30) Priority: 28.04.2023 JP 2023074834
(71) Applicant: ABB Schweiz AG, 5400 Baden (CH)
(72) Inventor: Iida, Kisumi, Tokyo, 1416022 (JP); Umezawa, Norio, Tokyo, 1416022 (JP); Yamazaki, Takurou, Tokyo, 1416022 (JP)
(74) Representative: Zimmermann & Partner Patentanwälte mbB

(57) **Abstract**

[Problem] To suppress pressure fluctuations caused by coating material discharged from each of the discharge ports, so that a constant discharge amount of coating material can be discharged from each of the discharge ports.

[Means for Solving] The coating machine 10 of the present invention is a coating machine that coats the coating surface of the object to be coated by means of coating material discharged from the coating head 30, characterized by having a plurality of liquid chambers 35 arranged along one direction of the coating head 30 and each supplied with coating material via an independent branched supply channel 42, and a plurality of discharge ports 36 provided for each liquid chamber 35

## Description

### [Technical Field]

The present invention relates to a coating machine.

### [Background Art]

A coating machine is proposed that applies pressure to a high viscosity coating material to intermittently discharge coating material from a plurality of discharge ports provided in the coating head [see, for example, Patent Literature 1 and Patent Literature 2]. In this coating machine, a pressurized coating is once delivers into a liquid chamber provided inside a coating head, and then intermittently discharged from each of a plurality of discharge ports provided in a liquid chamber and applied to the coating surface of the object to be coated. Hereinafter, the application of coating material to the coating surface of an object to be coated may be referred to as coating. In this coating machine, it is also envisioned to discharge coating material from all discharge ports of the plurality of discharge ports provided in the coating head to perform coating, and to discharge coating material from the discharge ports of a portion of the plurality of discharge ports, i.e., to perform coating by changing the coating width.

### [Prior Art Literature]

### [Patent Literature]

[Patent Literature 1] Japanese Unexamined Patent Application Publication 2006-334512
[Patent Literature 1] Japanese Unexamined Patent Application Publication H9-234409

### [Summary of the invention]

### [Problem to be solved by the invention]

By the way, the coating material is supplied to the liquid chamber provided in the coating head such that it is discharged from each of the plurality of discharge ports at a constant discharge rate. Therefore, when discharging coating material from a portion of a plurality of discharge ports, the pressure of coating material stored in the liquid chamber is increased compared to when discharging coating material from all discharge ports, and the discharge amount of coating material discharged from the discharge ports is simultaneously increased. As the pressure of the coating material supplied to the liquid chamber increases, the trajectory of the coating material discharged from the discharge port changes and is applied to the coating surface of the object to be coated. As a result, there is a coating unevenness on the coating surface of the object to be coated, where coating material is not applied, or where coating material discharged from two adjacent discharge ports overlaps in the form of streaks. In addition, even if the trajectory of the coating material is expelled from the discharge port without changing the trajectory of the coating material, the discharge amount of coating material discharged from the discharge port is increasing, so the film thickness of the coating material in the area coated using all of the plurality of discharge ports and the film thickness of the area coated using part of the plurality of discharge ports will be different. Therefore, even considering the entire coating surface of the object to be coated, coating unevenness occurs. In this way, it is difficult to maintain the uniformity of film thickness in the coating surface when coating material is discharged from a portion of the discharge port of the plurality of discharge ports and coating is performed.

Also, a plurality of discharge ports provided in the coating head are arranged along the sub-scanning direction of the coating head, and the larger the number of discharge ports, the longer the liquid chamber will also be in the sub-scanning direction of the coating head. Therefore, when many discharge ports are arranged in the sub-scanning direction of the coating head, coating material is more likely to be supplied to the central portion of the liquid chamber in the sub-scanning direction of the coating head, while on the other hand, it is difficult for coating material to be supplied to both ends of the liquid chamber in the sub-scanning direction of the coating head. Therefore, the more multiple discharge ports provided in the coating head, the more difficult it is to control the discharge amount of coating material discharged from each of the discharge ports to be the same discharge amount, and when coating material discharged from the coating head is applied to the coating surface, the more likely it is to cause the coating unevenness described above.

It is an object of the present invention to provide a coating machine that allows a constant discharge amount of coating material to be discharged from each of the discharge ports by suppressing pressure fluctuations caused by the coating material discharged from each of the discharge ports.

### [Means for solving the problem]

The coating machine in one aspect of the present invention is a coating machine that coats the coating surface of the object to be coated by means of coating material discharged from the coating head, characterized by having a plurality of liquid chambers arranged along one direction of the coating head and each supplied with coating material via an independent branched supply channel, and a plurality of discharge ports provided for each liquid chamber.

### [Effect of the Invention]

According to the present invention, by suppressing pressure fluctuations caused by coating material discharged from each of the discharge ports, a constant discharge amount of coating material can be discharged from each of the discharge ports.

### [Brief Description of the Drawings]

[Figure 1] Figure 1 is a diagram illustrating an example of a coating machine that is a coating machine for which the present invention has been implemented.
[Figure 2] Figure 2 is a diagram illustrating an example configuration of a coating head and coating material supply device.
[Figure 3] Figure 3 is a diagram showing an example coating head with a plurality of removable liquid chamber modules.
[Figure 4] Figure 4 is a diagram illustrating the shape of the discharge port.
[Figure 5] Figure 5 is a cross-sectional view showing an example of a nozzle plate provided with a cylindrical nozzle.
[Figure 6] Figure 6 is a diagram illustrating the shape of the liquid chamber.
[Figure 7] Figure 7 is a diagram illustrating the shape of the liquid chamber.

### [Modes for carrying out the invention]

A coating machine which implements the present invention will be described below on the basis of the drawings. The coating machine of the present embodiment is arranged to the side of a coating line in an automobile manufacturing plant and is used for coating vehicle bodies conveyed along the coating line. The following describes when coating is performed on a vehicle body after it has been temporarily stopped at the location where the vehicle body is being coated [hereinafter referred to as the "coating position").

While the vehicle body of an automobile is described as an example of the object to be coated by the coating machine (hereinafter referred to as the object to be coated), the object to be coated may also be an automobile part other than a vehicle body (examples include, but are not limited to, doors, hoods, various panels, etc.), or various parts other than automobile parts (for example, airplane or railway exterior parts), and thus is not limited to a vehicle body of an automobile and may be any object that requires coating.

Furthermore, coating here is performed for the purpose of forming a coating film on the surface of the object to be coated to provide protection of that surface and improved appearance. Therefore, coating includes not only the coating of an object to be coated using coating material of a specific color or coating material having a specific function, but also the coating of an object to be coated using coating materials of multiple colors in sequence. Furthermore, coating includes coating with patterns, illustrations, images, etc.

In the following, the X-axis is the longitudinal direction of the vehicle body 200 when the vehicle body 200 carrying the coating line is stopped at the coating position, the width direction of the vehicle body 200 is the Y-axis, and Z-axis the direction orthogonal to each of the front and back directions and the width direction of the vehicle body 200, i.e., the vertical direction of the vehicle body 200. In the longitudinal direction of the vehicle body 200, the front of the body 200 is in the x direction and the rear of the vehicle body 200 is in the -x direction. Also, in the width direction of the vehicle body 200, the right direction of the vehicle body 200 is in the y direction and the left direction of the vehicle body 200 is in the -y direction. Furthermore, in the vertical direction of the vehicle body 200, the upper direction of the body 200 is set to the z direction, and the lower direction of the vehicle body 200 is set to the -z direction.

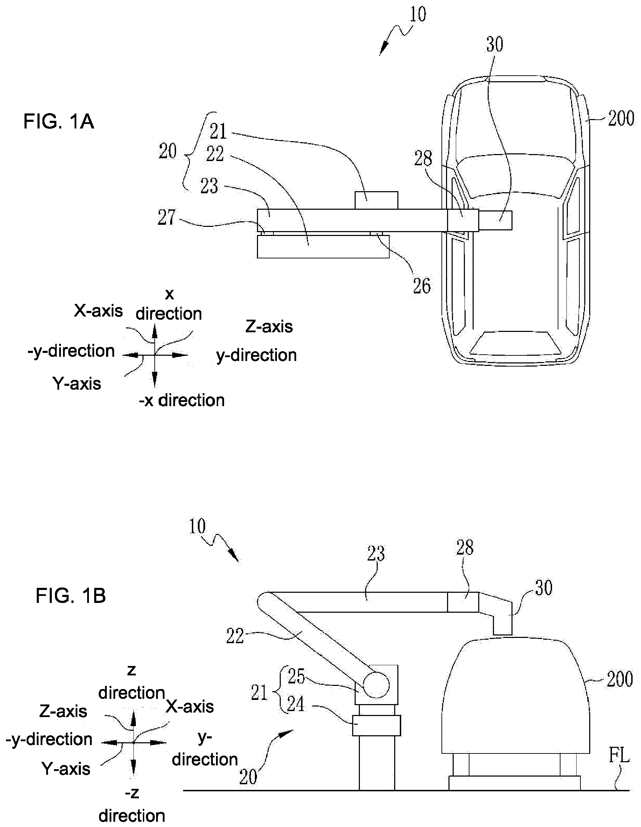

It is also shown that coating is performed by moving the coating head 30 in the front-rear direction (x direction or -x direction in FIG. 1A) of the vehicle body 200 in the coating position. Thus, in the coating of the vehicle body 200 by the coating head 30, the front and rear direction of the body 200 in which the coating head 30 moves is the main scanning direction, and the width direction of the vehicle body 200 (y direction or -y direction in FIG. 1A) is the sub-scanning direction.

Here, the coating machine 10 in the present embodiment moves the coating head 30 to one side of the main scanning direction (in the -x direction] to perform one line of coating, and after the end of the one line of coating, moves the coating head 30 to one side of the sub-scanning direction (in the -y direction], for example, a distance corresponding to the coating width in the one line of coating, and moves the coating head 30 to the other side of the main scanning direction (in the -x direction in FIG. 1A) to perform the next line of coating. This coating head 30 is repeatedly reciprocated in the main scanning direction to coat the vehicle body 200. Also, while the illustration is omitted, the coating machine 10 holds the coating head 30 in a waiting position retracted from the coating line from the end of coating of one vehicle body 200 until the next vehicle body 200 to be coated is moved to the coating position.

As shown in FIG. 1A and 1B, the coating machine 10 has, by way of example, a robot arm 20 and a coating head 30. The robot arm 20 is composed of a multi-axis arm having a base 21 and multiple (two in FIG. 1A and 1B) arm members 22, 23. The base 21 has a fixed portion 24 and a rotating portion 25 rotatable relative to the fixed portion 24. The rotating part 25 rotates as a rotation center in a direction perpendicular to the floor surface FL of the coating line (Z-axis in FIGS. 1A and 1B) by driving a motor (not shown) provided in the interior of the fixing part 24.

Hereinafter, among the multiple arm members 22, 23, the arm member 22 coupled to the rotating portion 25 will be referred to as the first turning arm 22, and the arm member 23 coupled to the first turning arm 22 will be referred to as the second turning arm 23.

The first turning arm 22 is coupled to a movable shaft portion 26 provided in the rotating portion 25 at one end in the direction of extension of the first turning arm 22. Although drawings are omitted, the movable shaft portion 26 provided in the rotating portion 25 is provided with a motor (not shown) for rotating the first turning arm 22 coupled to rotating portion 25 in a plane orthogonal to the floor surface FL of the coating line (e.g., the YZ plane when the robot arm 20 is in the state of FIG. 1B).

The first turning arm 22 is coupled to the second turning arm 23 via the movable shaft portion 27 at the other end in the direction of extension of the first turning arm 22. The movable shaft portion 27 provided on turning arm 22 is provided with a motor (not shown) for rotating the second turning arm 23 coupled to the first turning arm 22 in a plane orthogonal to the floor surface FL of the coating line (e.g., the YZ plane when the robot arm 20 is in the state of FIG. 1B). Moreover, although not illustrated, the central axis of the movable shaft portion 26 of the rotating portion 25 and the central axis of the movable shaft portion 27 provided in the first turning arm 22 are parallel. Moreover, although details will be described below, the second turning arm 23 is provided with a coating material supply device 40 as described below.

The other end of the second rotary arm 23 in the direction of extension is provided with a wrist portion 28. The wrist portion 28 holds the coating head 30. The wrist portion 28 has multiple motors, not shown, each with a different axis direction of the drive shaft, and driving any of these motors causes the held coating head 30 to rotate using any one of the multiple shafts that the wrist portion 28 has as a rotation center. It should be noted that the number of shaft portions should be two or more.

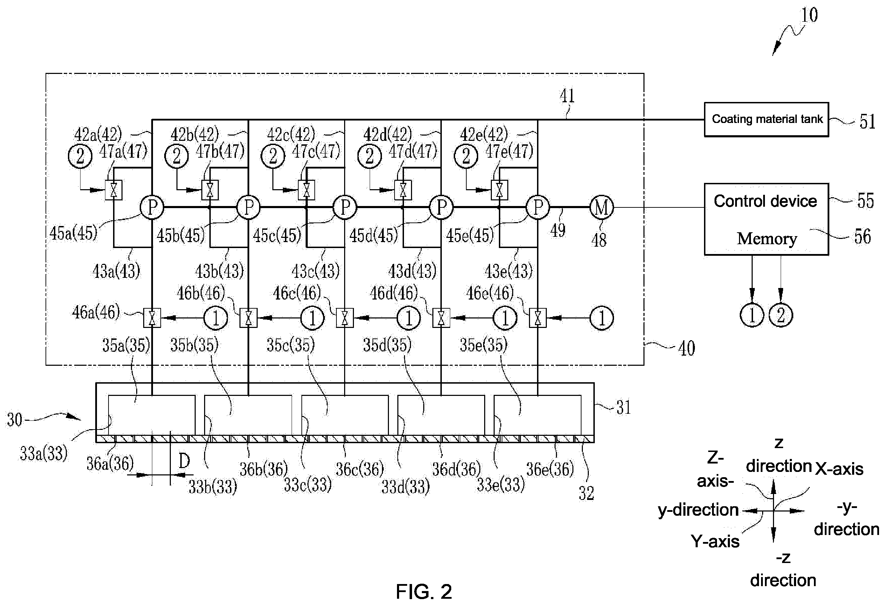

As shown in FIG. 2, coating machine 10 includes coating head 30 and coating material supply 40. The coating head 30 is held in the wrist portion 28 provided in the second turning arm 23. The coating head 30 includes a head body 31 and a nozzle plate 32.

The head body 31 includes a plurality of concave portions 33 with an open bottom side of the head body 31. A plurality of concave portions 33 are provided at regular intervals along a predetermined direction of the head body 31. In FIG. 2, five concave portions 33 are illustrated when arranged in the sub scanning direction (Y-axis direction] of the coating head 30. Hereinafter, regarding the plurality of concave portions 33 and the configuration corresponding to the concave portions 33,From the left side in FIG. 2, they may be referred to as "~a," "~b," "~c," "~d" and "~e."

The plurality of concave portions 33 (33a, 33b, 33c, 33d, 33e) have, for example, rectangular shaped interior spaces 35 (35a, 35b, 35c, 35d, 35e). The plurality of concave portions 33 (33a, 33b, 33c, 33d, 33e) are each identical in shape. In other words, in the interior spaces 35 (35a, 35b, 35c, 35d, 35e) of the plurality of concave portions 33 (33a, 33b, 33c, 33d, 33e), the length (width) in the sub-scanning direction (Y-axis direction], the length (depth) in the main scan direction (X-axis direction], and the length (height) in the up and down direction (Z-axis direction] of the coating head 30 are all the same.

The plurality of concave portions 33 (33a, 33b, 33c, 33d, 33e) are connected at the top of the concave portions 33 (33a, 33b, 33c, 33d, 33e) to each of the branched supply channels 42 (42a, 42b, 42c, 42d, 42e) of the coating material supply device 40 described below.

The nozzle plate 32 is a plate-shaped member secured to the lower surface of the head body 31. When the nozzle plate 32 is secured to the lower surface of the head body 31, the plurality of concave portions 33 (33a, 33b, 33c, 33d, 33e) provided in the head body 31 are shielded by the nozzle plate 32. At this time, the interior spaces 35 (35a, 35b, 35c, 35d, 35e) of the plurality of concave portions 33 (33a, 33b, 33c, 33d, 33e) is held liquid-tight by the nozzle plate 32.

As discussed above, each of the plurality of concave portions 33 (33a, 33b, 33c, 33d, 33e) is connected to a branched supply channel 42 (42a, 42b, 42c, 42d, 42e) of the coating material supply device 40. Thus, each of the interior spaces 35 (35a, 35b, 35c, 35d, 35e) of the plurality of concave portions 33 (33a, 33b, 33c, 33d, 33e) is a temporary storage space for coating materials delivered through each of the branched supply channels 42 (42a, 42b, 42c, 42d, 42e). The interior spaces 35 (35a, 35b, 35c, 35d, 35e) held liquid-tight by the plurality of concave portions 33 (33a, 33b, 33c, 33d, 33e) and the nozzle plate 32 may be referred to as the liquid chambers 35 (35a, 35b, 35c, 35d, 35e).

As described above, the interior spaces 35 and each of the plurality of concave portions 33 provided in the head body 31 are identical in shape. Thus, with the nozzle plate 32 secured to the head body 31, the volumes (capacities) of the interior spaces 35 (35a, 35b, 35c, 35d, 35e) shielded by the nozzle plate 32 are all the same.

The nozzle plate 32 has a discharge port (nozzle) 36 arranged in a plurality of sub-scanning directions of the coating head 30. In FIG. 2, only some discharge ports 36 are marked with reference numbers. The plurality of discharge ports 36 are arranged in the nozzle plate 32 such that the spacing between the two adjacent discharge ports 36 (the distance between the centers of the two adjacent discharge ports 36] D is the same spacing. Note that the distance D between two adjacent discharge ports 36 is preferably 0. 5 mm or more and 10 mm or less.

In the present embodiment, a plurality of concave portions 33 are illustrated when five concave portions 33 are arranged in the sub scanning direction (Y-axis direction] of the coating head 30. By the way, a plurality of concave portions 33 may be provided in the head body 31 such that every other concave portion is shifted by a predetermined distance in the x direction or the -x direction. In such cases, it is preferable that the plurality of discharge ports 36 provided corresponding to each of the plurality of concave portions 33 are also provided on the nozzle plate 32 so that every other outlet is shifted by a predetermined interval in the x direction or the -x direction.

The plurality of discharge ports 36 are provided in the nozzle plate 32 such that when the nozzle plate 32 is attached to the head body 31, an equal number of discharge ports 36 is assigned to each of the plurality of liquid chambers 35 (35a, 35b, 35c, 35d, 35e) formed in the nozzle plate 32 and the plurality of concave portions 33 (33a, 33b, 33c, 33d, 33e).

In the present embodiment, a coating head 30 composed of a head body 31 having a plurality of concave portions 33 and a nozzle plate 32 fixed to the head body 31 is described as an example, but a member having a plurality of concave portions 33 (hereinafter referred to as a concave portion forming member) may be provided separately from the head body 31 to be a coating head 30 fixed to the head body 31 in the order of the concave portion forming members and nozzle plates 32. In addition, if the concave portion forming members described above are provided, after securing the concave portion forming members to the nozzle plate 32, the nozzle plate 32 may be a coating head 30 secured to the head body 31. In these cases, a concave portion forming member having a plurality of concave portions 33 may be secured to the head body 31 or nozzle plate 32, or a concave portion forming member having one concave portion 33 may be secured to the head body 31 or nozzle plate 32.

The coating material supply device 40 has a supply channel 41, a plurality of branched supply channels 42 branched from the supply channel 41, and a reflux channel 43 provided in each of the plurality of branched supply channels 42. In FIG. 2, an example is shown where five liquid chambers 35 are provided in the coating head 30. Thus, in the coating material supply device 40 shown in FIG. 2, a branched supply channel 42 and a reflux channel 43 branched from the supply channel 41 are each provided with five chambers. Here, the branched supply channel 42 corresponds to the supply channel described in the Claims.

The supply channel 41 is connected to the coating material tank 51 at an upstream end to supply coating material stored in the coating material tank 51 to a plurality of branched supply channels 42 (42a, 42b, 42c, 42d, 42e). The coating material tank 51 is installed, for example, on the floor surface FL of the coating line. The coating material tank 51 may be mounted, for example, on the floor surface FL of the coating line, and may be provided in the interior of the rotating arm of either the first rotating arm 22 or the second rotating arm 23 of the robot arm 20 of the coating machine 10, or in the interior of the base 21 of the coating machine 10.

Here, the coating material tank 51 is capable of holding coating material stored in the coating material tank 51 under pressure. By allowing the coating material tank 51 to hold the coating material under pressure, it is possible to deliver the coating material to the supply channel 41 without providing a pump or other delivery means in coating material tank 51.

The coating material tank 51 also preferably has a stirring means for stirring coating material stored in the coating material tank 51. The coating material tank 51 has a stirring means to prevent the pigments (or dyes) contained in the coating material from precipitating to the bottom of the coating material tank 51 and to deliver coating material that evenly holds the pigments (or dyes) towards the supply channel 41.

Also, the coating material tank 51 preferably has a temperature holding means for maintaining a constant temperature of coating material stored in the coating material tank 51. The coating material tank 51 has a temperature holding means to prevent coating irregularities on the coating surface.

In addition, the coating material tank 51 is provided with multiple pieces for each type of coating material used (color and type of coating material itself). In this case, a switching means must be provided to switch between the connection of the coating material tank and the supply channel of any of the multiple coating material tanks.

In addition to the coating material tank 51, a cleaning tank containing cleaning solution is connected to the supply channel 41 described above. The cleaning solution stored in the cleaning tank is for cleaning the supply channel 41, the branched supply channel 42, and the coating head 30.

Also, the supply channel 41 may have a removal filter or degassing module. Here, the removal filter removes foreign matter such as coarse particles and pigment agglomerates contained in the coating material, as well as bubbles that exceed a predetermined size among the bubbles contained in the coating material. In addition, the degassing module removes (degasses) dissolved gas and bubbles present in the coating material.

In addition, the supply channel 41 may be provided with a temperature adjustment mechanism having, for example, a heater or cooling means to maintain a constant temperature of the coating material flowing through the supply channel 41. By providing a temperature adjustment mechanism, it is possible to prevent the separation of pigments and solutions in coating materials flowing through the supply channel 41.

A plurality of branched supply channels 42 (42a, 42b, 42c, 42d, 42e) are each branched from supply channels 41 at the upstream end and connected to each of the plurality of concave portions 33 at the downstream end. The branched supply channels 42 (42a, 42b, 42c, 42d, 42e) have gear pumps 45 (45a, 45b, 45c, 45d, 45e). The gear pumps 45 (45a, 45b, 45c, 45d, 45e) draw coating material flowing through branched supply channels 42 (42a, 42b, 42c, 42d, 42e) when the gear pumps 45 (45a, 45b, 45c, 45d, 45e) are driven, and delivered to the downstream side of branched supply channels 42 (42a, 42b, 42c, 42d, 42e), that is, the concave portions 33 (33a, 33b, 33c, 33d, 33e) to which the branch supply channels 42 (42a, 42b, 42c, 42d, 42e) are connected, by applying a constant pressure. Here, the gear pump 45 corresponds to the pressurizing means described in the Claims. Note that the gear pumps 45 (45a, 45b, 45c, 45d, 45e) disposed in each of the branched supply channels 42 (42a, 42b, 42c, 42d, 42e) have the same capacity (delivery amount).

Branched supply channels 42 (42a, 42b, 42c, 42d, 42e) have control valves 46 (46a, 46b, 46c, 46d, 46e) located downstream from gear pumps 45 (45a, 45b, 45c, 45d, 45e). The control valves 46 open the branched supply channels 42 (4 2a, 42b, 42c, 42d, 42e) when the valve is opened and close the branched supply channels 42 (42a, 42b, 42c, 42d, 42e) when the valve is closed. Control valves 46 (46a, 46b, 46c, 46d, 46e) are opened when coating material is ejected from discharge ports 36 of nozzle plate 32 provided corresponding to concave portions 33 (33a, 33b, 33c, 33d, 33e) connected to branched supply channels 42 (42a, 42b, 42c, 42d, 42e) and closed when coating material is not ejected from discharge ports 36 of nozzle plate 32. The control valve 46 corresponds to the first valve described in the Claims.

The reflux channel 43 (43a, 43b, 43c, 43d, 43e) is a reflux channel for coating material delivered from the gear pump 45 (45a, 45b, 45c, 45d, 45e) to the upstream side of the gear pump 45 (45a, 45b, 45c, 45d, 45e) in the branched supply channel 42 (42a, 42b, 42c, 42d, 42e). One end of the reflux channel 43 (43a, 43b, 43c, 43d, 43e) is connected to the branched supply channel 42 (42a, 42b, 42c, 42d, 42e) at a position between the gear pump 45 (45a, 45b, 45c, 45d, 45e) and the control valve 46 (46a, 46b, 46c, 46d, 46e). The other end of the reflux channel 43 (43a, 43b, 43c, 43d, 43e) is connected to the branched supply channel 42 (42a, 42b, 42c, 42d, 42e) at a position upstream from the gear pump 45 (45a, 45b, 45c, 45d, 45e).

In the reflux channel 43 (43a, 43b, 43c, 43d, 43e), control valves 47 (47a, 47b, 47c, 47d, 47e) are arranged. Control valves 47 (47a, 47b, 47c, 47d, 47e) correspond to the second valve described in the Claims. The control valves 47 (47a, 47b, 47c, 47d, 47e) open the reflux channels 43 (43a, 43b, 43c, 43d, 43e) when the valves are open, and close the reflux channels 43 (43a, 43b, 43c, 43d, 43e) when the valves are closed. Control valves 47 (47a, 47b, 47c, 47d, 47e) are closed when coating material is ejected from discharge ports 36 (36a, 36b, 36c, 36d, 36e) of nozzle plate 32 provided corresponding to liquid chambers 35 (35a, 35b, 35c, 35d, 35e) connected to branched supply channels 42 (42a, 42b, 42c, 42d, 42e) and open when coating material is not ejected from discharge ports 36 (36a, 36b, 36c, 36d, 36e) of nozzle plate 32. When the control valves 47 (47a, 47b, 47c, 47d, 47e) are open, the control valves 46 (46a, 46b, 46c, 46d, 46e) are closed. Thus, coating material delivered from gear pumps 45 (45a, 45b, 45c, 45d, 45e) circulates between branched supply channels 42 (42a, 42b, 42c, 42d, 42e) and reflux channels 43 (43a, 43b, 43c, 43d, 43e).

Drive motor 48 simultaneously drives gear pumps 45 (45a, 45b, 45c, 45d, 45e) provided in each of the plurality of branched supply channels 42. While the illustration is omitted, the output shaft of the drive motor 48 is coupled to a common drive shaft 49 that transmits a driving force to each of the rotating drives (e.g., drive pump gears) of the gear pumps 45 (45a, 45b, 45c, 45d, 45e) provided in the plurality of branched supply channels 42 (42a, 42b, 42c, 42d, 42e). Therefore, when the output shaft of the drive motor 48 is rotated by the drive of the drive motor 48, the common drive shaft 49 rotates to rotate the rotation drive of the gear pumps 45 (45a, 45b, 45c, 45d, 45e) provided in each of the plurality of branched supply channels 42 (42a, 42b, 42c, 42d, 42e). This causes the gear pumps 45 (45a, 45b, 45c, 45d, 45e) installed in each of the multiple branched supply channels 42 (42a, 42b, 42c, 42d, 42e) to drive simultaneously. Here, the drive motor 48 corresponds to the drive source described in the Claims.

The controller 55 reads the various data stored in the memory 56 of the controller 55 to control the opening and closing of the control valves 46 (46a, 46b, 46c, 46d, 46e), control valves 47 (47a, 47b, 47c, 47d, 47e), and drive motor 48. Memory 56 stores, for example, path data, coating material data, etc. It should be noted that the control device 55 corresponds to the opening/closing control unit described in the Claims.

The path data is data showing the path of movement of the coating head 30 in the coating of the vehicle body 200. In addition, the coating material data is data that summarizes the information of the liquid chamber 35 to which discharge port 36 or the discharge port 36 is assigned to be used in coating and the information indicating the open/close status of the control valves 46, 47 corresponding to the liquid chamber 35 for each coating material in a single line.

Next, the control of objects to be coated using the coating machine 10 shown in the present embodiment will be described. For example, the coating head 30 held in the robot arm 20 is held in a waiting position. When the vehicle body 200 carried on the coating line is stopped at the coating position, the controller 55 retrieves the path data from the memory 56 to drive the robot arm 20 based on the path data. This causes the coating head 30 to move to the coating start position. When the coating head 30 is moved to the coating start position, the coating head 30 stops at the coating start position.

As the coating head 30 moves to the coating start position, the controller 55 reads coating material data from the memory 56. The control device 55 performs open and close control of the control valve 46 provided in the branch supply channel 42 and the control valve 47 provided in the reflux channel 43 based on the retrieved coating material data.

For example, when coating material is discharged from all of the plurality of discharge ports 36 provided in the nozzle plate 32, all control valves 46 (46a, 46b, 46c, 46d, 46e) provided in each of the plurality of branched supply channels 42 (42a, 42b, 42c, 42d, 42e) are opened and all control valves 47 (47a, 47b, 47c, 47d, 47e) provided in the reflux channel 43 are closed. If all of the control valves 46 provided in the plurality of branched supply channels 42 have already been opened and the control valves 47 provided in the reflux channel 43 have already been closed, control of these control valves 46, 47 is not performed.

The controller 55 then drives the robot arm 20 to move the coating head 30 in the main scan direction. At the same time, the controller 55 drives the drive motor 48. When the drive motor 48 is driven, the common drive shaft 49 coupled to the output axis of the drive motor 48 rotates. As discussed above, the common drive shaft 49 is configured to transmit a driving force to each of the rotating drives of the gear pumps 45 (45a, 45b, 45c, 45d, 45e) provided in each of the plurality of branched supply channels 42 (42a, 42b, 42c, 42d, 42e). Therefore, when the output shaft of the drive motor 48 is rotated by the drive of the drive motor 48, the rotational drive portion of the gear pump 45 (45a, 45b, 45c, 45d, 45e) to which the common drive shaft 49 and the said common drive axis 49 is fitted and rotates. This causes the gear pumps 45 (45a, 45b, 45c, 45d, 45e) installed in each of the multiple branched supply channels 42 (42a, 42b, 42c, 42d, 42e) to drive simultaneously.

When each of the gear pumps 45 (45a, 45b, 45c, 45d, 45e) provided in the plurality of branched supply channels 42 (42a, 42b, 42c, 42d, 42e) starts driving, the gear pump 45 draws coating material stored in the coating material tank 51 into each branched supply channel 42 (42a, 42b, 42c, 42d, 42e). The gear pumps 45 (45a, 45b, 45c, 45d, 45e) then deliver the drawn coating material towards each of the liquid chambers 35 (35a, 35b, 35c, 35d, 35e). When gear pumps 45 (45a, 45b, 45c, 45d, 45e) deliver coating material toward each of liquid chambers 35 (35a, 35b, 35c, 35d, 35e), a constant pressure is applied to the coating material being pumped.

By the way, the control valves 46 (46a, 46b, 46c, 46d, 46e) arranged downstream from the plurality of branched supply channels 42 (42a, 42b, 42c, 42d, 42e) are each opened, and when the control valves 47 (47a, 47b, 47c, 47d, 47e) arranged in the plurality of reflux channels 43 (43a, 43b, 43c, 43d, 43e) are each closed, the coating material delivered from the gear pumps 45 (45a, 45b, 45c, 45d, 45e) to each of the branched supply channels 42 (42a, 42b, 42c, 42d, 42e) does not flow through the reflux channels 43 (43a, 43b, 43c, 43d, 43e), but instead flows into the liquid chambers 35 (35a, 35b, 35c, 35d, 35e) connected to the branched supply channels 42 (42a, 42b, 42c, 42d, 42e).

As described above, gear pumps 45 (45a, 45b, 45c, 45d, 45e) are delivering coating material at constant pressures towards liquid chambers 35 (35a, 35b, 35c, 35d, 35e). Thus, coating material delivered by the gear pump 45 (45a, 45b, 45c, 45d, 45e) towards the liquid chamber 35 pushes coating material stored in the liquid chamber 35 (35a, 35b, 35c, 35d, 35e) from each of the discharge ports 36 provided in the nozzle plate 32 at a constant pressure. As a result, the coating head 30 continues to intermittently discharge coating material at a constant pressure from each of the discharge ports 36 of the coating head 30. This applies coating material discharged from the coating head 30 to the coating surface of the vehicle body 200.

In the coating in the coating machine 10 described above, in a single line of coating, the width (hereinafter referred to as the coating width) in the sub-scanning direction of the coating material discharged from the coating head 30 may be narrowed and coated.

As described above, a predetermined number (for example, five) of the discharge ports 36 provided in the nozzle plate 32 are assigned to each of the liquid chambers 35 (35a, 35b, 35c, 35d, 35e). Thus, when coating with a narrower coating width is performed, the controller 55 controls the discharge of coating material from each of the discharge ports 36 provided in the nozzle plates 32 at each of the liquid chambers 35 rather than at each of the discharge ports 36.

An example of coating with a narrower coating width may include stopping the supply of coating material to liquid chambers 35a, 35e located at both ends of the sub-scanning direction of the coating head 30 out of five liquid chambers 35 (35a, 35b, 35c, 35d, 35e) disposed in the sub-scanning direction.

In this case, the controller 55 closes the control valves 46a, 46e provided in the branched supply channels 42a, 42e connected to the liquid chambers 35a, 35e and opens the control valves 47a, 47e provided in the reflux channels 43a, 43e. On the other hand, control valves 46b, 46c, 46d in branched supply channels 42b, 42c, 42d connected to liquid chambers 35b, 35c, 35d are open and control valves 47b, 47c, 47d in reflux channels 43b, 43c, 43d are closed. Thus, the coating material is supplied to the liquid chambers 35b, 35c, 35d.

When drive motor 48 is driven, each of gear pumps 45 (45a, 45b, 45c, 45d, 45e) is also driven. At this time, coating material delivered downstream from the branched supply channel 42a (42e) by the drive of the gear pump 45a (45e) is circulated between the branched supply channel 42a (42e) and the reflux channel 43a (43e). On the other hand, due to the drive of gear pumps 45b (45c, 45d), coating material delivered downstream from branched supply channels 42b (42c, 42d) is delivered into liquid chambers 35b (35c, 35d). As a result, coating material is discharged at a constant pressure from each of the five discharge ports 36 assigned to the liquid chambers 35b (35c, 35d).

When coating with a narrow coating width, i.e., by discharging coating material from some discharge ports 36, the coating material with a constant pressure is also discharged, as is the case when coating by discharging coating material from all discharge ports 36. This can inhibit pressure fluctuations in coating material discharged from each discharge port 36 even if coating is performed with a narrow coating width. As a result, the coating material discharged from the discharge port 36 is applied to the desired position of the coating surface of the vehicle body 200 without changing the trajectory at the time of discharge, and the generation of coating unevenness caused by the coating material discharged from the coating head 30 being applied off the desired position of the coating surface of the vehicle body 200 is also suppressed. In addition, the coating unevenness shown here is areas on the coating surface of the vehicle body 200 where no coating material has been applied or where the coating material discharged from the two adjacent discharge ports 36 has been overlapped and appears as streaks.

It should be noted that when coating with a narrow coating width is performed, it is illustrated that of the five liquid chambers 35 (35a, 35b, 35c, 35d, 35e) arranged in the sub-scanning direction of the coating head 30, one liquid chamber 35a located at one end and one liquid chamber 35e located at the other end of the sub-scanning direction is stopped, but the supply of coating material to any one of these liquid chambers 35a, 35e may be stopped. Also, when coating with a narrower coating width, the supply of coating material to a predetermined number of liquid chambers 35 (e.g., liquid chambers 35a, 35b, 35c, 35d, 35e) counted from one end in the sub-scanning direction of five liquid chambers 35 (35a, 35b, 35d, 35e, etc.) may be stopped.

In addition to narrowing the coating width and coating, there are also cases where multiple coating lines are coated. In such cases, instead of supplying coating material to one of the five liquid chambers 35 (35a, 35b, 35c, 35d, 35e) located at both ends of the coating head 30 in the sub-scanning direction, the supply of coating material to at least one liquid chamber 35 of the liquid chambers 35b, 35c, and 35d arranged at the central portion of the coating head 30 in the sub-scanning direction is stopped.

In the present embodiment, the number of discharge ports 36 assigned to each liquid chamber 35 (35a, 35b, 35c, 35d, 35e) of the coating head 30 is the same number, but may be different from the number of discharge ports 36 assigned to the liquid chambers 35b, 35c, 35d located in the central portion of the coating head 30 in the sub-scanning direction and the number of discharge ports 36 assigned to the liquid chambers 35a, 35e located at both ends of the coating head 30 in the sub-scanning direction, for example. In this case, for example, the number of discharge ports 36 assigned to the liquid chambers 35a, 35e disposed at both ends of the coating head 30 in the sub-scanning direction is less than the number of discharge ports 36 assigned to the liquid chambers 35b, 35c, 35d disposed at the central portion of the coating head 30 in the sub-scanning direction. In this case, the spacing of the discharge ports 36 assigned to the liquid chambers 35a, 35e may be the same as the spacing of the discharge ports 36 assigned to the liquid chambers 35b, 35c, 35d, or may be wider than the spacing of the discharge ports 36 assigned to the liquid chambers 35b, 35c, 35d. By extending the spacing of the discharge ports 36 assigned to the liquid chambers 35a, 35e to greater than the spacing of the discharge ports 36 assigned to the liquid chambers 35b, 35c, 35d, in the coating area in one line of coating material, if one end of the coating head 30 in the sub-scanning direction is overlaid during the next line of coating material, it is possible to prevent the occurrence of coating unevenness due to a difference between the amount of coating material applied to an area to be coated in an overlapping manner and the amount of coating material applied to an area to be painted without overlapping.

In the present embodiment, the plurality of discharge ports 36 provided in the nozzle plate 32 are provided at the same spacing D, but of the plurality of liquid chambers 35 (35a, 35b, 35c, 35d, 35e) arranged along the sub-scanning direction of the coating head 30, the spacing of the discharge ports 36 assigned to the liquid chambers 35a, 35e located at both ends in the sub-scanning direction can also be wider than the spacing of the discharge ports 36 assigned to the central portion of the liquid chambers 35b, 35c, 35d in the sub-scanning direction. According to this, in the coating area in one line of coating material, if one end of the coating head 30 in the sub-scanning direction is overlaid during the next line of coating material, it is possible to prevent the occurrence of coating unevenness due to a difference between the amount of coating material applied to an area to be coated in an overlapping manner and the amount of coating material applied to an area to be painted without overlapping.

Also, of the plurality of liquid chambers 35 (35a, 35b, 35c, 35d, 35e) disposed along the sub-scanning direction of the coating head 30, the spacing of the discharge ports 36 assigned to the liquid chambers 35a, 35e located at both ends in the sub-scanning direction does not need to be fixed, and it is possible to increase the spacing of the adjacent discharge ports 36 as they go outward.

Although the present embodiment describes that the volumes of the plurality of liquid chambers 35 (35a, 35b, 35c, 35d, 35e) are each formed to be the same volume, it is also possible to make the volumes of some liquid chambers 35 of the plurality of liquid chambers 35 different from the volumes of other liquid chambers 35. In this case, of the plurality of liquid chambers 35 (35a, 35b, 35c, 35d, 35e) provided in the sub-scanning direction of the coating head 30, the volume of liquid chambers 35b, 35c, 35d provided in the central portion in the sub-scanning direction may be reduced to the volume of liquid chambers 35a, 35e provided at both ends in the sub-scanning direction. Methods for reducing the volumes of the liquid chambers include, for example, having either the width, depth, or height (depth) of the concave portions 33 smaller than the other concave portions 33.

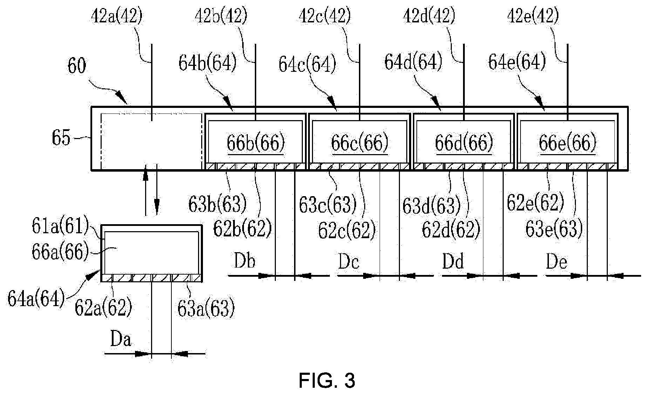

In the present embodiment, a coating head 30 is illustrated having a head body 31 having a plurality of concave portions 33 (33a, 33b, 33c, 33d, 33e), and a nozzle plate 32 having a plurality of discharge ports (nozzles) 36 formed which, by being attached to the lower surface of the head body 31, shields the opening portion of the plurality of concave portions 33 (3a, 33b, 33c, 33d, 33e). However, the coating head 60 may be composed of, for example, supply tanks 61 (61a, 61, 61c, 61d, 61e), a liquid chamber modules 64 (64a, 64b, 64c, 64d, 64e) with nozzle plates 63 (63a, 63b, 63c, 63d, 63e) provided with a plurality of discharge ports 62 (5 ports in FIG. 3], and a head body 65 with multiple liquid chamber modules 64 (64a, 64b, 64c, 64d, 64e), which is attached removable. In the liquid chamber modules 64 (64a, 64b, 64c, 64d, 64e), the interior spaces of the supply chambers 61 (61a, 61, 61c, 61d, 61e) and the nozzle plates 63 (63a, 63b, 63c, 63d, 63e) hold the interior spaces of the supply chambers 61 (61a, 61, 61c, 61d, 61e) in a liquid-tight manner, and the interior spaces are formed as the liquid chambers 66 (66a, 66b, 666c, 66d, 66e). In this case, when the liquid chamber module 64 (64a, 64b, 64c, 64d, 64e) is attached to the head body 65, the liquid chamber 66 (66a, 66b, 66c, 66d, 66e) in the liquid chamber module 64 (64a, 64b, 64c, 64d, 64e) is connected to the branched supply path 42 of the coating material supply device 40.

In the case of such a coating head 60, when changing the coating width at the time of coating of the vehicle body 200, the controller 55 controls the discharge port 62 (62a, 62b, 62c, 62d, 62e) that discharges the coating material for each liquid chamber 66 (66a, 66b, 66c, 66d, 66e), as in the present embodiment. In addition, if the coating width of the coating head 60 differs depending on the type of body to be coated, for example, of the liquid chamber modules 64 (64a, 64b, 64c, 64d, 64e) attached to the head body 65, the liquid chamber modules 64 that are not used for coating are removed from the head body 65 and then coated with the coating head 60. In this case, in the coating material supply device, there are branched supply channels 42 and reflux lines 43 corresponding to the removed liquid chamber module 64, and control valves 46, 47 disposed in branched supply channel 42 and reflux channel 43. Thus, in this case, the controller 55 must close the control valve 46 provided in the branched supply channel 42 corresponding to the removed liquid chamber module 64 and open the control valve 47 provided in the reflux channel 43 connected to the branched supply channel 42. It should be noted that the attachment and detachment of the liquid chamber module 64 with respect to the head body 65 is performed using a dedicated device.

If each of the plurality of liquid chamber modules 64 (64a, 64b, 64c, 64d, 64e) is detachable relative to the head body 65, a configuration may be provided to determine whether the plurality of liquid chamber modules 64 (64a, 64b, 64c, 64d, 64e) are attached to the head body 65. In this case, for example, a sensor (not shown) can be provided on the head body 65 to detect whether a liquid chamber module 64 (64a, 64b, 64c, 64d, 64e) is attached to the head body 65, or a circuit is provided on each of the liquid chamber modules 64 (64a, 64b, 64c, 64d, 64e) to energize the head body 65 when attached to the head body 65 to automatically determine whether a plurality of liquid chamber modules 64 (64a, 64b, 64c, 64d, 64e) are attached to the head body 65.

If each of the plurality of liquid chamber modules 64 (64a, 64b, 64c, 64d, 64e) is configured to be detachable relative to the head body 65, a means may be provided in the head body 65 to detect the position of the liquid chamber module 64 attached to the head body 65 or the position of the discharge port 62 of the liquid chamber module 64, and to adjust the position of the attached liquid chamber modules 64 By providing these means, the positions of each of the plurality of liquid chamber modules 64 (64a, 64b, 64c, 64d, 64e) can be held in a predetermined position.

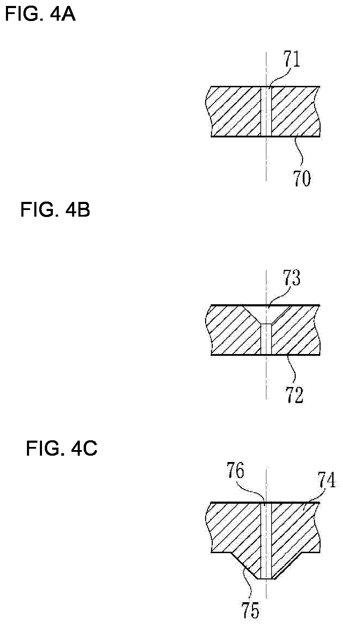

Although the shape of the plurality of discharge ports 36, 62 provided in the nozzle plates 32, 63 is not specifically described in the present embodiment, the following shape is conceivable as the shape of the discharge ports 36, 62 provided in the nozzle plates 32, 63. As shown in FIG. 4A, holes 71, for example circular in cross-sectional shape, that penetrates from an upper surface to a lower surface of the nozzle plate 70, can be a discharge ports for discharging coating material. Also, as shown in FIG. 4B, for example, holes 73 that penetrate from the top surface to the bottom surface of the nozzle plate 72 and are beveled at the ends of the top surface side (liquid chamber side) of the nozzle plate 72 can be the discharge ports for discharging coating material. It should be noted that if the holes 73 shown in FIG. 4B are used as the discharge ports, it has the effect of increasing the flow rate of the discharged coating material.

Further, as shown in FIG. 4C, for example, the lower surface side of the nozzle plate 74 can be etched to form a truncated conical protrusion 75 that protrudes downward from the lower surface of the nozzle plate 74, and a hole 76 having a circular cross-section, for example, that penetrates from the upper surface of the nozzle plate 74 to the tip end surface of the protrusion 75 can be used as a discharge port for discharging paint. In this configuration, the coating material is reduced to the tip of the protrusion 75, so that the coating material remaining at the tip of the protrusion 75 can prevent the trajectory of the coating material being discharged from changing. In this case, it is also possible to chamfer the top end of the nozzle plate 74 at the hole 76.

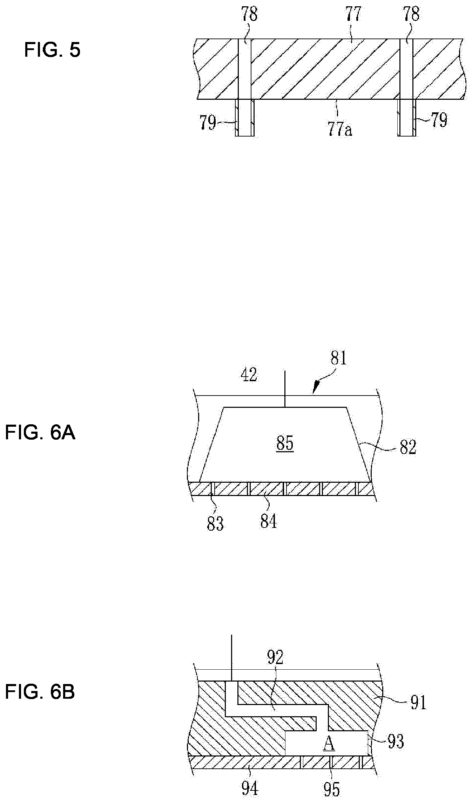

It is also possible to provide a cylindrical nozzle 79, for example, protruding downwardly from the lower surface 77a of the nozzle plate 77 at a position corresponding to each of the plurality of holes 78 provided in the nozzle plate 77, as shown in FIG. 5.

In the present embodiment, it is described that a single nozzle plate is provided with a plurality of discharge ports, but a discharge port may be formed, for example, by providing openings in each of the two laminated nozzle plates and overlaying the openings in each of these nozzle plates. The relative movement of the two nozzle plates may also change the size of the discharge port opening formed by combining the apertures provided in the two nozzle plates. It should be noted that the number of nozzle plates used in forming the discharge port need not be limited to 2, and it is also possible to form the discharge port using 3 or more nozzle plates.

In the coating head 30 shown in the present embodiment, of the plurality of discharge ports 36 provided in the nozzle plate 32, the shape of the discharge port 36 provided in the central portion in the sub-scanning direction of the coating head 30 and the shape of the discharge port 36 provided at both ends may be the same shape, or it is possible for them to have different shapes. It should be noted that the same is true for coating head 60, which is a structure in which liquid chamber module 64 is attached to head body 65, and the shape of discharge port 62 provided in nozzle plate 63 of liquid chamber module 64 may be the same shape or different shape for all liquid chamber modules 64.

In the present embodiment, the shape of the liquid chambers 35 formed by the concave portions 33 and the nozzle plates 32 is a rectangular shape, but the shape of the liquid chambers 35 need not be limited to a rectangular shape. For example, as shown in FIG. 6A, it is also possible to make the shape of the interior space of the supply tank 82 provided in the head body 81 a square pyramidal shape. In this case, as in the present embodiment, when the head body 81 is secured by the nozzle plate 84 having a discharge port 83, the interior space of the supply tank 82 is formed as a liquid chamber 85 that is held liquid-tight by the nozzle plate 84. By making the shape of the internal space of the supply tank 82 a square pyramidal shape, it is possible to reduce the volume of the liquid chamber 85 compared to using the shape of the internal space of the supply tank 82 as a rectangular shape. As shown in FIG. 6B, the head body 91 can also be provided with a crank-shaped passage 92 and a tank 93 to which the passage 92 is connected, and the nozzle plate 94 that shields the tank 93 is secured to the lower surface of the head body 91. At this time, a liquid chamber A is formed by the tank portion 93 of the head body 91 and the nozzle plate 94. In this case, it is necessary to provide a predetermined number of discharge ports 95 in the nozzle plate 94 in the position corresponding to liquid chamber A.

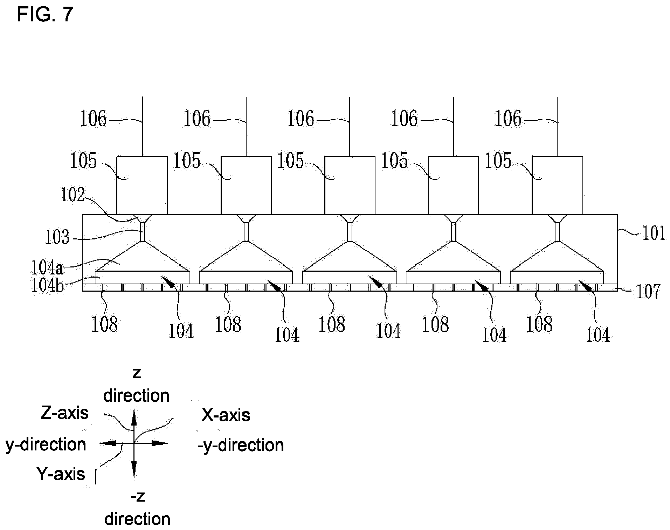

In addition, as shown in FIG. 7, it is also possible to provide a funnel-shaped inlet 102, a cylindrical flow path 103 connected to the inlet 102, and a liquid chamber 104 in the head body 101. The liquid chamber 104 includes a first space 104a in which the cross-sectional area in the xy plane is enlarged from the upper end of the flow path 103 toward the lower portion of the head body 101 (in the -z direction in FIG. 7], and a second space 104b in a rectangular form that is in the lower portion of the first space 104a. For example, the diameter of the inlet 102 is 3 mm and the diameter of the flow path 103 is 0. 5mm. Also, the width in the X-axis direction of the liquid chamber 104 is similar to the diameter of the flow path 103, for example 0. 5mm. In this case, for example, the control valve 105 is opened and coating material is delivered from the branched supply channel 106 to the liquid chamber 104 via the inlet 102 and the flow path 103. Coating materials delivered into the liquid chamber are evenly spread and discharged from each of the discharge ports 108 of the nozzle plate 107. In such a liquid chamber 104, the volume can be reduced relative to the rectangular liquid chamber and the coating material retention within the liquid chamber 104 can be suppressed. As a result, fluctuation in the pressure applied to the coating material discharged from the liquid chamber 104 to the discharge port 108 of the nozzle plate 107 can be suppressed. By suppressing the fluctuation of pressure applied to the coating material discharged from the discharge port 108 of the nozzle plate 107 from the liquid chamber 104, it is possible to control the pressure control of the coating material discharged from the discharge port 108 by driving the gear pump. Thus, the responsiveness of the pressure control of the coating material discharged from the discharge port 108 can be improved. At the same time, when cleaning each liquid chamber 104, pigments (dyes) remaining in the liquid chamber 104 and the discharge port 108 are easily removed, so it is possible to increase the cleaning efficiency in the liquid chamber 104 and the discharge port 108.

In the present embodiment, coating material is circulated between the branched supply channel 42 and the reflux channel 43 without supplying coating material to the liquid chamber 35 to which the discharging discharge port 36 is assigned. For example, it is also possible to place a three-way valve between the gear pump 45 and the liquid chamber 35 in place of the control valve 46 to switch the three-way valve between supplying coating material from the branched supply channel 42 to the liquid chamber 35 and returning coating material to the coating material tank 51 (circulation] from the branched supply channel 42 to return coating material to the coating material tank 51. If a three-way valve is provided to circulate the coating material, it is also possible to place a diaphragm pump in the flow path from the branched supply channel 42 back to the coating material tank 51. The placement of a diaphragm pump in the flow path from the branched supply channel 42 back to the coating material tank 51 prevents the precipitation of pigments (or dyes) contained in the coating material and allows the coating material temperature to be kept constant.

If a three-way valve is placed instead of the control valve 46, the configuration of the reflux channel 43 and the control valve 47 disposed in the reflux channel 43 may be omitted.

### <Summary of effects>

The coating machine 10 in the present embodiment is a coating machine 10 that coats the coating surface of the object to be coated by means of coating material discharged from the coating heads 30, 60, characterized by having a plurality of liquid chambers 35, 66 arranged along one direction of the coating heads 30, 60 and each supplied with coating material via an independent branched supply channel 42, and a plurality of discharge ports 36, 62 provided for each liquid chamber 35, 66.

According to this configuration, for example, in the case of a liquid chamber that is long in the sub-scanning direction of the coating head, the amount of coating material discharged from the discharge port provided at both ends in the sub-scanning direction of the coating head is less than the amount of coating material discharged from the discharge port provided at the central portion in the sub-scanning direction of the coating head, and it is prone to the occurrence of coating unevenness. In the present invention, a plurality of liquid chambers 35, 66 are arranged in the sub-scanning direction of coating heads 30, 60, so that coating material can be uniformly discharged from a predetermined number of discharge ports 36, 62 allocated to the plurality of liquid chambers 35, 66, and also to suppress fluctuations in the pressure of the coating material, and thus to prevent the occurrence of coating material irregularities on the coating surface. In addition, the discharge ports 36, 62 that discharge coating material and the discharge ports 36, 62 that do not discharge coating material can be controlled by the liquid chambers 35, 66, making it easy to control the coating width.

Each of the liquid chambers 66 having a discharge port 62 arranged in the sub-scanning direction of the coating head 60 is also detachable relative to the coating head 60 as a separate liquid chamber module 64.

Each of the liquid chambers 66 is detachable from the coating head 60 as a single independent liquid chamber module 64, so that when cleaning the liquid chamber 66 at the coating head 60 or replacing the liquid chamber, it is better to remove only the liquid chamber module 64 of interest to the coating head 60, so that the entire coating head is cleaned and the entire coating head is not required to be replaced. In addition, when changing the coating width depending on the coating material object, the coating width at the time of coating can be changed as necessary by removing the liquid chamber modules 64 that are not used for coating or by installing the liquid chamber modules 64 that are used.

Also, the number of discharge ports 36, 62 provided in the liquid chambers 35, 66 may differ between the liquid chambers 35, 66 disposed at both ends in the sub-scanning direction of the coating heads 30, 60 and the liquid chambers 35, 66 disposed at the central portion in the sub-scanning direction of the coating heads 30, 60.

When coating the coating material object back and forth, if the next coating material is applied to the edge portion of a single coating material, the amount of coating material applied in the overlapped part will increase, resulting in uneven coating. Therefore, by setting the number of discharge ports provided in the liquid chambers positioned at positions where overlapping coating is expected, such as at both ends in the sub-scanning direction, to be different from the other liquid chambers, the amount of coating material applied in the area applied overlapped is reduced. This can prevent coating unevenness from occurring in the places where coating material is applied overlapping and the places where coating material is not applied overlapping.

Also, among the plurality of discharge ports 36, 62 provided in the liquid chambers 35, 66, the spacing between the two adjacent discharge ports 36, 62 may differ between the liquid chambers 35, 66 arranged at both ends in the sub-scanning direction of the coating heads 30, 60 and the liquid chambers 35, 66 arranged at the central portion in the sub-scanning direction of the coating heads 30, 60.

When coating the coating material object back and forth, if the next coating material is applied to the edge portion of a single coating material, the amount of coating material applied in the overlapped part will increase, resulting in uneven coating. Therefore, by setting the interval of discharge ports provided in the liquid chambers positioned at positions where overlapping coating is expected, such as at both ends in the sub-scanning direction, to be different from the other liquid chambers, the amount of coating material applied in the area applied overlapped is reduced. By suppressing the amount of coating material applied in the area applied overlapped, the film thickness of the coating material can be uniform on the coating surface at each of the places where coating material is applied overlapped and the places where coating material is not applied overlapped. As a result, it is possible to suppress the occurrence of coating unevenness based on the difference in coating material film thickness on the coating surface.

Also, the shape of discharge ports 36, 62 may differ between the liquid chambers disposed at both ends in the sub-scanning direction of the coating heads 30, 60 and the liquid chambers disposed at the central portion in the sub-scanning direction of the coating heads 30, 60.

By varying the shape of the discharge ports, for example, between the liquid chambers 35, 66 disposed at both ends in the sub-scanning direction of the coating heads 30, 60 and the liquid chambers 35, 66 disposed at the central portion in the sub-scanning direction of the coating heads 30, 60, the amount of coating material discharged from the discharge port 36, 62 disposed at both ends of the coating heads 30, 60 in the sub-scanning direction and the amount of coating material discharged from the discharge port 36, 62 disposed at the central portion in the sub-scanning direction can be varied. As a result, it is possible to prevent the occurrence of coating unevenness resulting from differences in coating material application amount in the area where the coating material is overlapped and the other areas.

The width of the liquid chambers 35, 66 in the sub scanning direction of the coating heads 30, 60 may also differ between the liquid chambers 35, 66 disposed at both ends in the sub scanning direction of the coating heads 30, 60 and the liquid chambers 35, 66 disposed at the central portion in the sub scanning direction of the coating heads 30, 60.

For example, by making the width of the liquid chambers 35, 66 in the sub-scanning direction of the coating heads 30, 60 different between the liquid chambers 35, 66 disposed at both ends in the sub-scanning direction of the coating heads 30, 60 and the liquid chambers 35, 66 disposed at the central portion in the sub-scanning direction of the coating heads 30, 60, for example, in the case of overlapping coating, the area where the overlapping coating is performed can be suppressed as much as possible in the coating by coating heads 30, 60.

It is also provided in response to each of the liquid chambers 35, 66, and comprises a branched supply channel 42 providing coating material to the liquid chamber, a gear pump 45 that is positioned to apply pressure to the coating material and deliver it toward the liquid chambers 35, 66, a control valve 46 positioned downstream from the gear pumps 45 at the branched supply channels 42, reflux channels 43 that are branched from a position downstream from gear pumps 45 and upstream from the control valves 46 at the branched supply channels 42, control valves 47 positioned at the reflux channels 43, and a controller 55 that controls the opening and closing of the control valves 46 and control valves 47.

According to this configuration, coating material discharge or stopping coating material discharge can be performed with the control valves 46 and 47 open and closed while driving the gear pump 45. Also, when the coating material discharge is stopped, the coating material is circulated in the branched supply channel 42 and the reflux channel 43, so that when the coating width is changed, pressure fluctuation of the coating material discharged from the discharge port 36, 62 can be prevented.

The control device 55 also individually controls the opening and closing of the control valve 46 and the control valve 47 for each branched supply channel 42.

According to this configuration, the discharge of coating material or the stop of the discharge of coating material can be controlled for each liquid chamber by opening and closing the control valves 46 and 47 corresponding to the liquid chambers 35, 66.

The gear pumps 45 are also driven by a drive motor 48, which simultaneously drives each of the gear pumps 45 arranged in the branched supply channel 42 provided corresponding to a plurality of liquid chambers 35, 66.

According to this configuration, the device configuration can be simplified because the drive and stop of the gear pump 45 arranged in the branched supply channel 42, which is provided corresponding to the plurality of liquid chambers 35, 66, do not need to be controlled for each pump.

### [Explanation of References]

10 ... Coating machine
30, 60... Coating heads
35, 66 - Liquid chamber
36, 62 - Discharge port
42...Branched supply channel
43 ... Reflux channel
45...Gear pump
46... Control valve
47...Control valve
48...Drive motor
55...Controller
64...Liquid chamber module

## Claims

1. A coating machine that coats the coating surface of an object to be coated with coating material discharged from a coating head, the coating machine comprising:
a plurality of liquid chambers disposed along one direction of the coating head and each supplied with the coating material via independent branched supply channels; and
discharge ports provided in a plurality of the liquid chambers.

2. The coating machine according to claim 1, **characterized in that** each of the liquid chambers having the discharge ports arranged in one direction can be attached to and detached from the coating head as an independent module.

3. The coating machine according to claim 1, **characterized in that** the number of discharge ports provided in the liquid chamber differs between the liquid chambers arranged at both ends in the one direction and the liquid chambers arranged at a central portion in the one direction

4. The coating machine according to Claim 1 **characterized in that**, among the plurality of discharge ports arranged in the liquid chamber, the distance between the two adjacent discharge ports is different between the liquid chambers arranged at both ends in the one direction and the liquid chamber arranged at the central portion in the one direction.

5. The coating machine according to claim 1, **characterized in that** shape of the discharge ports is different between the liquid chambers arranged at both ends in the one direction and the liquid chambers arranged at the central portion in the one direction.

6. The coating machine according to claim 1, **characterized in that** the width of the liquid chambers in the one direction differs between the liquid chambers arranged at both ends in the one direction and the liquid chambers arranged at the central portion in the one direction.

7. The coating machine according to Claim 1 **characterized by** comprising a supply channel provided corresponding to each of the liquid chambers and providing the coating material to the liquid chamber; and
pressurizing means disposed in the supply channels and applying pressure to the coating material to deliver it towards the liquid chambers; and
a first valve disposed downstream from the pressurizing means in the supply channel; and
a reflux channel branched from a position downstream from the pressurizing means in the supply channel and upstream from the first valve and refluxing the coating material delivered from the pressurizing means to an upstream side of the pressurizing means in the supply channel; and
a second valve disposed in the reflux channel; and
an opening/closing control part for opening/closing control of the first valve and the second valve.

8. The coating machine according to Claim 7, **characterized in that** the opening/closing control portion individually controls the opening/closing of the first valve and the second valve for each of the supply channels.

9. The coating machine according to Claim 7 or Claim 8, **characterized in that** the pressurizing means is a gear pump driven by a drive source;
wherein the drive source simultaneously drives the gear pump provided in each of the supply channels.
